# EUROPÄISCHE PATENTSCHRIFT

(11) **EP 1 886 768 B1**
(45) Veröffentlichungstag und Bekanntmachung des Hinweises auf die Patenterteilung: **19.08.2009**
(21) Anmeldenummer: 07013224.6
(22) Anmeldetag: 06.07.2007
(51) Int. Cl.: B25F 5/00

(54) **Werkzeugmaschine mit mehrstufigem Getriebe**
Machine tool with multi-step gears
Machine-outil dotée d'engrenages à plusieurs étapes

(30) Priorität: 09.08.2006 DE 102006037190
(43) Veröffentlichungstag der Anmeldung: 13.02.2008
(73) Patentinhaber: TTS Tooltechnic Systems AG & Co. KG, 73240 Wendlingen (DE)
(72) Erfinder: Fleischmann, Bernd, 73235 Weilheim (DE)
(74) Vertreter: Bregenzer, Michael

(56) Entgegenhaltungen:
- EP-A- 1 364 752
- EP-A- 1 382 421
- DE-U1- 20 304 314
- GB-A- 2 335 011
- US-A1- 2002 096 343
- US-A1- 2005 215 385
- US-B1- 6 796 921

## Beschreibung

Die Erfindung betrifft eine Werkzeugmaschine, insbesondere Handwerkzeugmaschine, gemäß dem Oberbegriff des Anspruchs 1.

Eine Werkzeugmaschine dieser Art geht aus DE 203 04 314 U1 hervor.

Das bei dieser Werkzeugmaschine vorhandene Planetengetriebe ist im Ausführungsbeispiel als ein Dreiganggetriebe ausgestaltet, wobei ein Vierganggetriebe möglich ist.

Die US 2005/0215385 A1 zeigt eine Werkzeugmaschine mit einem Planetengetriebe, das ein Hohlrad aufweist, das an rippenförmigen Stützelementen gestützt ist, so dass das Hohlrad gegenüber einem Getriebegehäuse zentriert wird.

Aus der US 6,796,921 B1 geht eine Werkzeugmaschine mit einem Dreigang-Planetengetriebe hervor. Das Getriebe hat drei Gangstufen, nämlich hoch, mittel und niedrig. Ein derartiges Dreigang-Planetengetriebe ist auch bei einer aus US 2002/0096343 A1 bekannten Werkzeugmaschine in Gestalt beispielsweise eines Schraubers oder einer Bohrmaschine realisiert.

Bei einer aus der Praxis bekannten Werkzeugmaschine ist das Getriebe auf drei Gänge ausgelegt. Dabei erhält man je nach dem, welches der beiden Hohlräder der eingangsseitigen Getriebestufe bei drehfreiem anderen Hohlrad auf drehfeste Lagerung geschaltet ist, jeweils eine andere Drehzahl der Ausgangswelle. Außerdem kann der Planetenträger der eingangsseitigen Getriebestufe drehfest mit dem zugewandten Hohlrad der eingangsseitigen Getriebestufe verbunden werden, so dass - das andere Hohlrad der eingangsseitigen Getriebestufe ist dabei drehfrei angeordnet - das Übersetzungsverhältnis der eingangsseitigen Getriebestufe gleich eins und die eingangsseitige Getriebestufe sozusagen unwirksam wird. Ferner weist die ausgangsseitige Getriebestufe ein festes, das heißt unveränderbares Übersetzungsverhältnis auf, das bei unwirksamer erster Getriebestufe dem Verhältnis zwischen der eingangsseitigen und der ausgangsseitigen Drehzahl entspricht. Auf diese Weise liegt insgesamt ein Dreiganggetriebe vor.

Ausgehend hiervon liegt der vorliegenden Erfindung die Aufgabe zugrunde, eine Werkzeugmaschine der eingangs genannten Art mit optimierten Schaltmöglichkeiten zu schaffen.

Diese Aufgabe wird durch eine Werkzeugmaschine gemäß der technischen Merkmale des Anspruchs 1 gelöst.

Somit liegt ein Vierganggetriebe vor. Hierzu ist es im Wesentlichen nur erforderlich, das Hohlrad der ausgangsseitigen Getriebestufe verstellbar anzuordnen. Da ferner die bei der bekannten Maschine vorhandene Schaltstellung, in der der Planetenträger der eingangsseitigen Getriebestufe drehfest mit dem zugewandten Hohlrad der eingangsseitigen Getriebestufe verbunden ist, entfallen kann, ergibt sich praktisch kein Mehraufwand, so dass ein kostengünstiges Getriebe mit einem weiteren vierten Gang vorliegt. Das erfindungsgemäße Getriebe baut außerdem platzsparend.

Zweckmäßige Ausgestaltungen der erfindungsgemäßen Werkzeugmaschine sind in den Unteransprüchen angegeben.

Nachstehend wird ein Ausführungsbeispiel der Erfindung anhand der Zeichnung im Einzelnen erläutert. Es zeigen:
- Figur 1: eine erfindungsgemäße Werkzeugmaschine im Längsschnitt gemäß der Schnittlinie I-I in Figur 2, wobei an der Maschine zusätzlich zur Figur 2 noch ein von der Abtriebswelle getriebenes Spannfutter angebracht ist, und
- Figur 2: die Maschine nach Figur 1 in Draufsicht gemäß Pfeil II.

Bei der aus der Zeichnung hervorgehenden Werkzeugmaschine 1 handelt es sich um eine Handwerkzeugmaschine in Gestalt eines Akkuschraubers, der durch ein geeignetes Spannfutter ergänzt und dann auch als Bohrmaschine verwendet werden kann. Anstelle eines Akkugerätes könnte es sich jedoch auch um eine mittels eines Anschlusskabels an ein Stromnetz anschließbare oder um eine pneumatisch betriebene Maschine handeln.

Die Werkzeugmaschine 1 weist einen pistolenartig abstehenden, abgeschnitten gezeichneten Handgriff 2 mit einem vom Benutzer mit einem Finger zu betätigenden Schaltelement 3 an der Vorderseite des Handgriffs 2 zum Ein- und Ausschalten eines im Handgriff 2 untergebrachten elektrischen Schalters 4 auf, der die Stromzufuhr zu einem elektrischen Antriebsmotor 5 beherrscht. Die Akkueinheit ist im abgeschnittenen Bereich des Handgriffs 2 angeordnet.

Der Handgriff 2 steht von einer Antriebseinheit 6 der Werkzeugmaschine 1 ab, die ein Getriebe 7 enthält, das zwischen einer vom Antriebsmotor 5 her angetriebenen Eingangswelle 8 und einer zur Eingangswelle 8 koaxialen Ausgangswelle 9 angeordnet ist, die durch eine Halspartie 10 der Antriebseinheit 6 verläuft. Die Ausgangswelle 9 steht mit ihrem Endbereich 9a vor die Halspartie 10 vor und kann eine von ihrer Stirnseite 11 ausgehende, nicht weiter dargestellte Werkzeugaufnahme insbesondere mit mehrkantigem Querschnitt aufweisen, in die ein Schraubendreherbit oder ein sonstiges Werkzeugbit eingesetzt werden kann.

Die Maschine kann auch, wie bereits erwähnt, als Bohrmaschine oder dergleichen verwendet werden. Hierzu wäre es denkbar, dass man den Bohrer unmittelbar in die entsprechend angepasste Werkzeugaufnahme der Ausgangswelle 9 einsetzt. Zweckmäßigerweise ist es jedoch, dass man an der Vorderseite der Antriebseinheit 6 ein mit der Ausgangswelle 9 drehfest verbundenes Spannfutter 12 für den Bohrer oder ein sonstiges rotierendes Werkzeug anbringt.

Es versteht sich, dass die Ausgangswelle 9 in geeigneter Weise drehgelagert ist.

Die Eingangswelle 8 kann von der Motorwelle des Antriebsmotors 5 gebildet oder von dieser her angetrieben werden.

Bei dem Getriebe 7 handelt es sich um ein zweistufiges Getriebe, das in oder an einem Getriebegehäuse 13 angeordnet ist und zwei hintereinander angeordnete PlanetenGetriebestufen A und B aufweist.

Die der Eingangswelle 8 zugewandte eingangsseitige Getriebestufe A enthält zwei koaxial zueinander angeordnete, jeweils eine Außenverzahnung aufweisende Sonnenräder 14, 15, die drehfest, zweckmäßigerweise einstückig, miteinander verbunden sind und einen unterschiedlichen Durchmesser aufweisen. Die beiden Sonnenräder 14, 15 sind koaxial zur Eingangswelle 8 angeordnet und drehfest mit dieser verbunden. Beim Ausführungsbeispiel sind die beiden Sonnenräder 14, 15 unmittelbar an die Eingangswelle 8 angesetzt.

Zweckmäßigerweise ist von den beiden Sonnenrädern 14, 15 das größeren Durchmesser aufweisende Sonnenrad 14 der Eingangswelle 8 zugewandt.

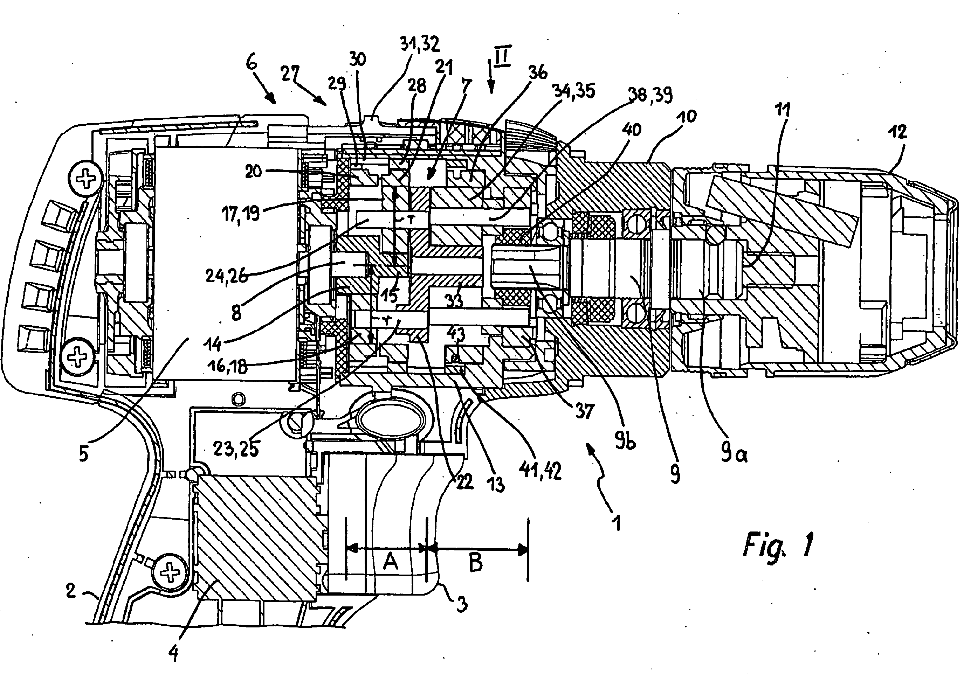

Die eingangsseitige Getriebestufe A enthält des Weiteren zwei in axialer Richtung hintereinander angeordnete Sätze 16, 17 von eine Außenverzahnung aufweisenden Planetenrädern 18 bzw. 19, von denen der Planetenradsatz 16 dem der Eingangswelle 8 zugewandten Sonnenrad 14 und der Planetenradsatz 17 dem anderen Sonnenrad 15 der eingangsseitigen Getriebestufe A zugeordnet ist. Die beiden Planetenradsätze 16, 17 bestehen jeweils aus mehreren, zweckmäßigerweise drei, über den Umfang verteilt angeordneten Planetenrädern 18 bzw. 19, von denen in der Schnittebene der Figur 1 jeweils nur ein Planetenrad enthalten ist. Die anderen, außerhalb der Zeichenebene befindlichen Planetenräder wurden der Übersichtlichkeit wegen nicht eingezeichnet. Die Planetenräder 18 des Planetenradsatzes 16 kämmen mit dem der Eingangswelle 8 zugewandten Sonnenrad 14, die Planetenräder 19 des Planetenradsatzes 17 kämmen mit dem anderen Sonnenrad 15.

Zur eingangsseitigen Getriebestufe A gehören ferner zwei in axialer Richtung hintereinander angeordnete, innenverzahnte Hohlräder 20, 21, von denen das eine Hohlrad 20 dem der Eingangswelle 8 zugewandten Planetenradsatz 16 und das andere Hohlrad 21 dem anderen Planetenradsatz 17 zugeordnet ist. Die Hohlräder 20, 21 umschließen den jeweils zugeordneten Planetenradsatz 16 bzw. 17, so dass die Planetenräder 18 des der Eingangswelle 8 zugewandten Planetenradsatzes 16 mit der Innenverzahnung des Hohlrades 20 und die Planetenräder 19 des anderen Planetenradsatzes 17 mit der Innenverzahnung des anderen Hohlrades 21 kämmen.

Die Planetenräder 18 bzw. 19 sind somit in üblicher Weise in radialer Richtung zwischen dem innen angeordneten Sonnenrad 14 bzw. 15 und dem außen angeordneten Hohlrad 20 angeordnet und kämmen einerseits mit dem Sonnenrad 14 bzw. 15 und andererseits mit dem Hohlrad 20 bzw. 21.

Die beiden Planetenradsätze 16, 17 sind in Umfangsrichtung versetzt zueinander angeordnet, so dass in Umfangsrichtung jeweils ein Planetenrad des einen Satzes zwischen zwei Planetenrädern des jeweils anderen Satzes angeordnet ist.

Die eingangsseitige Getriebestufe A weist ferner an ihrer der ausgangsseitigen Getriebestufe B zugewandten Seite einen zu den Sonnenrädern 14, 15 und den Hohlrädern 20, 21 koaxialen Planetenträger 22 auf, von dem zwei Sätze 23, 24 von in Umfangsrichtung verteilt angeordneten, feststehend an ihm angeordneten Lagerstiften 25 bzw. 26 zur Seite der Planetenräder 18, 19 hin abstehen, die zur drehbaren Lagerung der Planetenräder dienen. Dabei ist der von den Lagerstiften 25 gebildete Lagerstiftsatz 23 den Planetenrädern 18 des Planetenradsatzes 16 und der von den Lagerstiften 26 gebildete Lagerstiftsatz 24 den Planetenrädern 19 des Planetenradsatzes 17 zugeordnet.

Die beiden Lagerstiftsätze 23, 24 sind den beiden Planetenradsätzen 16, 17 entsprechend in Umfangsrichtung versetzt zueinander und mit unterschiedlichem Radius angeordnet. Die Lagerstifte 25, die dem dem Planetenträger 22 abgewandten Planetenradsatz 16 zugeordnete sind, verlaufen zwischen den Planetenrädern 19 des dem Planetenträger 22 zugewandten Planetenradsatzes 17 hindurch.

Die Anordnung ist ferner so getroffen, dass die beiden Planetenradsätze 16, 17 der eingangsseitigen Getriebestufe A einen gleichen Umkreisradius r aufweisen. Dementsprechend haben die beiden Hohlräder 20, 21 einen gleichen Innendurchmesser, so dass sie gleich ausgebildet sein können.

Es ist ersichtlich, dass die dem größeren Durchmesser aufweisenden Sonnenrad 14 zugeordneten Planetenräder 18 mit Bezug auf die dem kleineren Durchmesser aufweisenden Sonnenrad 15 zugeordneten Planetenräder 19 einen kleineren Durchmesser aufweisen und radial weiter außen angeordnet sind.

Die beiden Hohlräder 20, 21 der eingangsseitigen Getriebestufe A sind jeweils von einer mit Bezug auf das Getriebegehäuse 12 drehfesten Lagerung auf eine drehfreie Lagerung und umgekehrt schaltbar. Hierzu ist den beiden Hohlrädern 20, 21 der eingangsseitigen Getriebestufe A eine von außen her betätigbare Umschalteinrichtung 27 zugeordnet, so dass in einem ersten Schaltzustand das eine Hohlrad drehfest zum Gehäuse und das andere Hohlrad drehfrei ist und in einem zweiten Schaltzustand das eine Hohlrad drehfrei und das andere Hohlrad drehfest zum Gehäuse ist. In Figur 1 ist das Hohlrad 20 drehfrei und das Hohlrad 21 drehfest angeordnet.

Die beiden Hohlräder 20, 21 der eingangsseitigen Getriebestufe A weisen einen gleichen Außendurchmesser auf. Ferner enthält die Umschalteinrichtung 27 einen mit Bezug auf das Getriebegehäuse 13 drehfest und axial verschiebbar gelagerten Umschaltring 28, der in jedem der beiden Schaltzustände auf einem der beiden Hohlräder 20, 21 sitzt und dieses umschließt und dabei mit dem betreffenden Hohlrad 20 bzw. 21 in Verriegelungseingriff steht. Dieser Verriegelungseingriff kann beispielsweise dadurch hergestellt werden, dass die beiden Hohlräder 20, 21 an ihrem Außenumfang jeweils mindestens einen Verriegelungsvorsprung 29 aufweisen, der beim axialen Verschieben des Umschaltrings 28 mit einer entsprechenden Verriegelungsausnehmung am Innenumfang des Umschaltrings 28 in Eingriff gelangt.

Der Umschaltring 28 kann zu seinem axialen Verschieben an einer sich in axialer Richtung erstreckenden Führungsbahn 30 gelagert sein. Die Führungsbahn 30 ist gehäusefest angeordnet, so dass sie den Umschaltring 28 außerdem verdrehfest lagert.

Die Anordnung ist ferner so getroffen, dass der Umschaltring 28 außer seine beiden jeweils eines der Hohlräder 20, 21 festsetzenden Positionen keine weitere Position einnehmen kann.

Der Umschaltring 28 steht in Mitnahmeverbindung mit einer außen an der Werkzeugmaschine 1 angeordneten Betätigungshandhabe 31, die beim Ausführungsbeispiel von einem in axialer Richtung hin und her schiebbaren und dabei den Umschaltring 28 mitnehmenden Schiebegriffstück 32 gebildet wird. Die Mitnahmeverbindung zwischen Betätigungshandhabe 31 und Umschaltring 28 kann auf unterschiedliche Weise von einem Fachmann realisiert werden, so dass hierauf im Einzelnen nicht weiter eingegangen wird.

Je nach dem, welches der beiden Hohlräder 20, 21 drehfest und welches drehfrei angeordnet ist, erhält man eine andere Drehzahl der Ausgangswelle 9. Dabei treibt der dem jeweils drehfesten Hohlrad 20 bzw. 21 zugeordnete Planetenradsatz 16 bzw. 17, in Figur 1 der Planetenradsatz 17, den Planetenträger 22 der ersten Getriebestufe A. Der dem jeweils drehfreien Hohlrad 20 bzw. 21 zugeordnete Planetenradsatz 16 bzw. 17, in Figur 1 der Planetenradsatz 16, wird vom Planetenträger 22 in Umfangsrichtung ohne weitere Wirkung mitgenommen.

Die der Ausgangswelle 9 zugewandte ausgangsseitige Getriebestufe B weist ein drehfest, zweckmäßigerweise einstückig mit dem Planetenträger 22 der eingangsseitigen Getriebestufe A verbundenes Sonnenrad 33 mit einer Außenverzahnung auf, das somit von dem Planetenträger 22 angetrieben wird. Dem Sonnenrad 33 der ausgangsseitigen Getriebestufe B ist ein Planetenradsatz 34 zugeordnet, der von mehreren, zweckmäßigerweise drei, über den Umfang verteilt angeordneten, außenverzahnten Planetenrädern 35 gebildet wird, von denen der Übersichtlichkeit wegen wiederum nur das in der Zeichenebene liegende Planetenrad 35 eingezeichnet ist. Die Planetenräder 35 kämmen mit dem Sonnenrad 33. Der Planetenradsatz 34 wird von einem innenverzahnten und mit den Planetenrädern 35 in Eingriff stehenden Hohlrad 36 umschlossen, das koaxial zum Sonnenrad 33 angeordnet ist. Zur ausgangsseitigen Getriebestufe B gehört ferner ein zum Sonnenrad 33 und dem Hohlrad 36 koaxialer Planetenträger 37, der an der der eingangsseitigen Getriebestufe A abgewandten Seite des Planetenradsatzes 34 der ausgangsseitigen Getriebestufe B angeordnet ist. Vom Planetenträger 37 steht ferner ein Satz 38 von den Planetenrädern 35 entsprechend über den Umfang verteilten, feststehend am Planetenträger 37 angeordneten Lagerstiften 39 ab, die zur Seite der Planetenräder 35 hin abstehen und zur drehbaren Lagerung der Planetenräder 35 dienen.

Der Planetenradsatz 34 der ausgangsseitigen Getriebestufe B ist in axialer Richtung dem Planetenträger 22 der eingangsseitigen Getriebestufe A unmittelbar benachbart.

Das Hohlrad 36 der ausgangsseitigen Getriebestufe B ist in axialer Richtung zwischen einer drehfest mit dem Getriebegehäuse 13 verbundenen wirksamen Position, die in Figur 1 dargestellt ist, und einer vom Getriebegehäuse 13 freien, teilweise auf den Planetenträger 22 der eingangsseitigen Getriebestufe A verlagerten unwirksamen Position verlagerbar. Diese unwirksame Position des Hohlrades 36 befindet sich in Figur 1 links von der dargestellten wirksamen Position. In der nach links verschobenen unwirksamen Position steht das Hohlrad 36 der ausgangsseitigen Getriebestufe B sowohl mit dem Planetenträger 22 der eingangsseitigen Getriebestufe A als auch mit dem Planetenradsatz 34 der ausgangsseitigen Getriebestufe B in Eingriff, so dass der Planetenträger 22 und der Planetenradsatz 34 über das Hohlrad 36 drehfest miteinander verbunden sind. Dabei ist das Hohlrad 36 in dieser Position drehfrei gelagert. Auf diese Weise erhält man an der ausgangsseitigen Getriebestufe B ein Übersetzungsverhältnis gleich eins, so dass die ausgangsseitige Getriebestufe B sozusagen unwirksam ist.

In der dargestellten wirksamen Position des Hohlrades 36 steht dieses in axialem Schiebeeingriff mit dem Getriebegehäuse 13. Dies ist der Übersichtlichkeit wegen nicht eingezeichnet. Es kann sich um einen vom Getriebegehäuse 13 zum Hohlrad 36 vorstehenden Arretiervorsprung handeln, der in eine entsprechende Arretierausnehmung des Hohlrads 36 eingreift. Beim Verschieben des Hohlrads 36 nach links in seine unwirksame Position kommt die Arretierausnehmung von dem Arretiervorsprung frei.

Damit das innenverzahnte Hohlrad 36 bei seinem Verschieben in die unwirksame Position in drehfesten Eingriff mit dem Planetenträger 22 gelangen kann, kann dieser eine entsprechende Außenverzahnung aufweisen.

In der wirksamen Position des Hohlrades 36 erhält man in der ausgangsseitigen Getriebestufe B eine Drehzahlübersetzung.

Der Planetenträger 37 der ausgangsseitigen Getriebestufe B ist drehfest mit der Ausgangswelle 9 verbunden. Dabei ist beim dargestellten Ausführungsbeispiel zwischen dem Planetenträger 37 und der Ausgangswelle 9 noch eine sogenannte Spindelstoppeinrichtung angeordnet, die bei stillstehendem Motor die Abtriebswelle 9 in der Antriebsrichtung entgegengesetzter Drehrichtung feststellt, so dass das in Schraubverbindung mit der Ausgangswelle 9 stehende Spannfutter 12 abgeschraubt werden kann. Diese Spindelstoppeinrichtung interessiert vorliegend nicht weiter. Daher wird des Verständnisses der Zeichnung wegen nur darauf hingewiesen, dass auf dem der ausgangsseitigen Getriebestufe B zugewandten Endbereich 9b der Ausgangswelle 9 ein Mitnahmering 40 drehfest angeordnet ist, der seinerseits in Mitnahmeverbindung mit dem Planetenträger 37 der ausgangsseitigen Getriebestufe B steht.

Dem Hohlrad 36 der ausgangsseitigen Getriebestufe B ist eine von außen her betätigbare Verstelleinrichtung 41 zugeordnet, mit der es in axialer Richtung zwischen seiner wirksamen und seiner unwirksamen Position verstellt werden kann. Diese Verstelleinrichtung 41 kann einen das Hohlrad 36 umschließenden, mit dem Hohlrad 36 in axialem Mitnähmeeingriff stehenden Verstellring 42 aufweisen. Diese Mitnahmeverbindung kann von einem Fachmann auf vielerlei Weise realisiert werden, bei der dargestellten Ausführungsform beispielsweise mittels eines einerseits am Verstellring 42 und andererseits am Hohlrad 36 angreifenden Drahtfederelements 43. Auf die Einzelheiten der Mitnahmeverbindung kommt es hier nicht weiter an.

Der Verstellring 42 steht in Mitnahmeverbindung mit einer außen an der Werkzeugmaschine 1 angeordneten Betätigungshandhabe 44, die beim Ausführungsbeispiel von einem in axialer Richtung verschiebbaren Schiebegriffstück 45 gebildet wird.

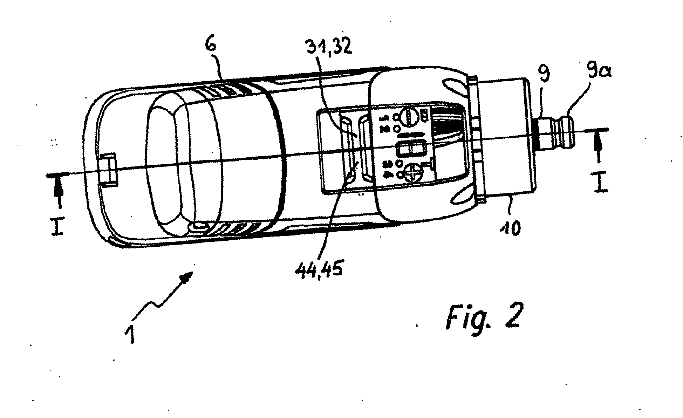

Die beiden dem Umschaltring 28 der eingangsseitigen Getriebestufe A und dem Verstellring 42 der ausgangsseitigen Getriebestufe B zugeordneten Betätigungshandhaben 31 und 44 können, wie beim Ausführungsbeispiel, unabhängig voneinander betätigt werden. In Figur 2 sind die beiden Betätigungshandhaben 31, 44 durch die dick gezeichnete Mittellinie voneinander getrennt, so dass sie unabhängig voneinander in axialer Richtung verschieben werden können.

Somit ergibt sich ein schaltbares Vierganggetriebe mit unterschiedlichen Drehzahlen der Ausgangswelle 9 in den vier Gängen, indem sowohl in der wirksamen als auch in der unwirksamen Position des Hohlrades 36 der ausgangsseitigen Getriebestufe B das eine oder das andere der beiden Hohlräder 20, 21 der eingangsseitigen Getriebestufe A auf drehfest und das jeweils andere der beiden Hohlräder 20, 21 auf drehfrei geschaltet werden kann.

Im ersten Gang, in dem die Drehzahl der Ausgangswelle 9 am kleinsten ist, ist das dem größeren Sonnenrad 14 der eingangsseitigen Getriebestufe A zugeordnete Hohlrad 20 drehfrei angeordnet, während die beiden anderen Hohlräder, d.h. das dem kleineren Sonnenrad 15 der eingangsseitigen Getriebestufe A zugeordnete Hohlrad 21 und das Hohlrad 36 der ausgangsseitigen Getriebestufe B mit Bezug auf das Getriebegehäuse drehfest angeordnet sind. Dabei befindet sich das Hohlrad 36 der ausgangsseitigen Getriebestufe B in seiner auf dem Planetenradsatz 34 sitzenden wirksamen Position. Die sich beim ersten Gang ergebende Situation ist in Figur 1 dargestellt.

Im zweiten Gang, in dem die Drehzahl der Ausgangswelle 9 größer als im ersten Gang ist, ist der Umschaltring 28 der eingangsseitigen Getriebestufe A auf das dem größeren Sonnenrad 14 der eingangsseitigen Getriebestufe A zugeordnete Hohlrad 20 verschoben, so dass dieses Hohlrad 20 drehfest und das dem kleineren Sonnenrad 15 zugeordnete Hohlrad 21 drehfrei angeordnet ist. Das Hohlrad 36 der ausgangsseitigen Getriebestufe B bleibt mit Bezug auf den ersten Gang unverändert in seiner drehfesten wirksamen Position.

Im dritten Gang, in dem die Drehzahl der Ausgangswelle 9 größer als im zweiten Gang ist, befindet sich der Umschaltring 28 wieder wie dargestellt auf dem dem kleineren Sonnenrad 15 zugeordneten Hohlrad 21 der eingangsseitigen Getriebestufe A, das somit drehfest zum Getriebegehäuse 13 angeordnet ist. Das andere Hohlrad 20 der eingangsseitigen Getriebestufe A ist dann frei drehbar. Ferner ist das Hohlrad 36 der ausgangsseitigen Getriebestufe B in Figur 1 nach links in die den Planetenträger 22 der eingangsseitigen Getriebestufe A mit dem Planetenradsatz 34 verbindende unwirksame Position verstellt, so dass an der ausgangsseitigen Getriebestufe B keine Drehzahlübersetzung stattfindet.

Im vierten Gang schließlich, in dem die Drehzahl der Ausgangswelle 9 größer als im dritten Gang ist, ist der Umschaltring 28 der eingangsseitigen Getriebestufe A wie im zweiten Gang auf das dem größeren Sonnenrad 14 zugeordnete Hohlrad 20 verschoben, so dass dieses drehfest und das dem kleineren Sonnenrad 15 zugeordnete Hohlrad 21 drehfrei ist. Das Hohlrad 36 der ausgangsseitigen Getriebestufe B bleibt wie im dritten Gang in seiner unwirksamen Position.

Bei einem Getriebe der erfindungsgemäßen Art lassen sich durch geeignete Dimensionierung der verschiedenen Zahnräder (Sonnenräder, Planetenräder, Hohlräder) verhältnismäßig große Drehzahlunterschiede zwischen den Gängen erreichen. Zweckmäßigerweise entspricht die Drehzahl im zweiten, dritten und vierten Gang jeweils der Drehzahl des benachbarten kleineren Gangs multipliziert mit einem Faktor im Bereich von etwa 1,8 bis 2,5.

Bei der für die Praxis vorgesehenen Maschine liegt die Drehzahl im ersten Gang im Bereich von etwa 430, im zweiten Gang im Bereich von etwa 900, im dritten Gang im Bereich von etwa 2100 und im vierten Gang im Bereich von etwa 4100 Umdrehungen pro Minute.

## Patentansprüche

1. Werkzeugmaschine, insbesondere Handwerkzeugmaschine, beispielsweise Akkuschrauber oder Handbohrmaschine, mit einer motorisch angetriebenen Eingangswelle (8) und einer Ausgangswelle (9), zwischen denen ein mehrstufiges Getriebe (7) mit zwei hintereinander angeordneten Planetengetriebestufen angeordnet ist, von denen die der Eingangswelle (8) zugewandte eingangsseitige Getriebestufe (A) zwei koaxial zueinander angeordnete und drehfest miteinander verbundene Sonnenräder (14, 15) unterschiedlichen Durchmessers, zwei in axialer Richtung hintereinander angeordnete und jeweils einem der eingangsseitigen Sonnenräder (14, 15) zugeordnete Planetenradsätze (16, 17), zwei in axialer Richtung hintereinander angeordnete und jeweils einem der Planetenradsätze (16, 17) zugeordnete und den jeweiligen Planetenradsatz umschließende Hohlräder (20, 21), die jeweils von einer drehfesten Lagerung auf eine drehfreie Lagerung und umgekehrt umschaltbar sind, und einen der ausgangsseitigen Getriebestufe (B) zugewandten, zu den Sonnenrädern (14, 15) und den Hohlrädern (20, 21) koaxialen Planetenträger (22) mit von ihm abstehenden Lagerstiften (25, 26), auf denen die Planetenräder (18, 19) drehbar gelagert sind, aufweist und von denen die der Ausgangswelle (9) zugewandte ausgangsseitige Getriebestufe (B) ein drehfest mit dem Planetenträger (22) der eingangsseitigen Getriebestufe (A) verbundenes Sonnenrad (33), einen dem Sonnenrad (33) zugeordneten Planetenradsatz (34), ein den Planetenradsatz (34) umschließendes Hohlrad (36) und einen der Ausgangswelle (9) zugewandten, zum Sonnenrad (33) und dem Hohlrad (36) koaxialen Planetenträger (37) mit von ihm abstehenden Lagerstiften (39), auf denen die Planetenräder (35) der ausgangsseitigen Getriebestufe (B) drehbar gelagert sind, enthält, wobei das Hohlrad (36) der ausgangsseitigen Getriebestufe (B) in axialer Richtung zwischen einer drehfest angeordneten Position und einer drehfesten, teilweise auf den Planetenträger (22) der eingangsseitigen Getriebestufe (A) verlagerten und diesen Planetenträger (22) drehfest mit dem Planetenradsatz (34) der ausgangsseitigen Getriebestufe (B) verbindenden unwirksamen Position verstellbar ist, derart, dass sich ein schaltbares Vierganggetriebe mit unterschiedlichen Drehzahlen der Ausgangswelle in den vier Gängen ergibt, indem in beiden Positionen des Hohlrades (36) der ausgangsseitigen Getriebestufe (B) das eine oder das andere der beiden Hohlräder (20, 21) der eingangsseitigen Getriebestufe (A) auf drehfest und das jeweils andere der beiden Hohlräder (20, 21) auf dreht frei schaltbar ist, **dadurch gekennzeichnet,**
- **dass** im ersten Gang, in dem die Drehzahl der Ausgangswelle (9) am kleinsten ist, das dem größeren Sonnenrad (14) der eingangsseitigen Getriebestufe (A) zugeordnete Hohlrad (20) drehfrei und die beiden anderen Hohlräder (21, 36) mit Bezug auf das Getriebegehäuse (13) drehfest angeordnet sind,
- **dass** im zweiten Gang, in dem die Drehzahl der Ausgangswelle (9) größer als im ersten Gang ist, das dem kleineren Sonnenrad (15) der eingangsseitigen Getriebestufe (A) zugeordnete Hohlrad (21) drehfrei und die beiden anderen Hohlräder (20, 36) mit Bezug auf das Getriebegehäuse (13) drehfest angeordnet sind,
- **dass** im dritten Gang, in dem die Drehzahl der Ausgangswelle (9) größer als im zweiten Gang ist, das dem größeren Sonnenrad (14) der eingangsseitigen Getriebestufe (A) zugeordnete Hohlrad (20) drehfrei, das dem kleineren Sonnenrad (15) der eingangsseitigen Getriebestufe (A) zugeordnete Hohlrad (21) mit Bezug auf das Getriebegehäuse (13) drehfest und das Hohlrad (36) der ausgangsseitigen Getriebestufe (B) in seiner unwirksamen Position angeordnet ist und
- **dass** im vierten Gang, in dem die Drehzahl der Ausgangswelle (9) größer als im dritten Gang ist, das dem größeren Sonnenrad (14) der eingangsseitigen Getriebestufe (A) zugeordnete Hohlrad (20) mit Bezug auf das Getriebegehäuse (13) drehfest, das dem kleineren Sonnenrad (15) der eingangsseitigen Getriebestufe (A) zugeordnete Hohlrad (21) drehfrei und das Hohlrad (36) der ausgangsseitigen Getriebestufe (B) in seiner unwirksamen Position angeordnet ist,
- und **dass** die Drehzahl der Ausgangswelle (9) im zweiten, dritten und vierten Gang jeweils der Drehzahl des benachbarten kleineren Gangs multipliziert mit einem Faktor im Bereich von etwa 1,8 bis 2,5 entspricht.

2. Werkzeugmaschine nach Anspruch 1, **dadurch gekennzeichnet, dass** bei der eingangsseitigen Getriebestufe (A) den beiden Planetenradsätzen (16, 17) jeweils ein gesonderter Satz von vom Planetenträger (22) abstehenden Lagerstiften (25, 26) zugeordnet ist, wobei die beiden Lagerstiftsätze (23, 24) winkelmäßig versetzt und mit unterschiedlichem Radius zueinander angeordnet sind und die dem dem Planetenträger (22) abgewandten Planetenradsatz (16) zugeordneten Lagerstifte (25) zwischen den Planetenrädern (19) des dem Planetenträger (22) zugewandten Planetenradsatzes (17) hindurch verlaufen.

3. Werkzeugmaschine nach Anspruch 2, **dadurch gekennzeichnet, dass** die beiden Planetenradsätze (16, 17) der eingangsseitigen Getriebestufe (A) einen gleichen Umkreisradius (r) aufweisen.

4. Werkzeugmaschine nach einem der Ansprüche 1 bis 3, **dadurch gekennzeichnet, dass** den beiden Hohlrädern (20, 21) der eingangsseitigen Getriebestufe (A) eine von außen her betätigbare Umschalteinrichtung (27) zugeordnet ist, so dass in einem ersten Schaltzustand das eine Hohlrad (21) drehfest zum Gehäuse (13) und das Hohlrad (20) drehfrei ist und in einem zweiten Schaltzustand das eine Hohlrad (21) drehfrei und das andere Hohlrad (20) drehfest zum Gehäuse (13) ist.

5. Werkzeugmaschine nach Anspruch 4, **dadurch gekennzeichnet, dass** die beiden Hohlräder (20, 21) der eingangsseitigen Getriebestufe (A) einen gleichen Außendurchmesser aufweisen und die Umschalteinrichtung (27) einen mit Bezug auf das Getriebegehäuse (13) drehfest und axial verschiebbar gelagerten Umschaltring (28) aufweist, der in jedem der beiden Schaltzustände auf einem der beiden Hohlräder (20, 21) sitzt und dieses umschließt und mit dem betreffenden Hohlrad in Verriegelungseingriff steht.

6. Werkzeugmaschine nach Anspruch 5, **dadurch gekennzeichnet, dass** der Umschaltring (28) in Mitnahmeverbindung mit einer außen an der Werkzeugmaschine (1) angeordneten Betätigungshandhabe (31) steht.

7. Werkzeugmaschine nach einem der Ansprüche 1 bis 6, **dadurch gekennzeichnet, dass** dem Hohlrad (36) der ausgangsseitigen Getriebestufe (B) eine von außen her betätigbare Verstelleinrichtung (41) zu seinem axialen Verstellen zwischen seiner wirksamen und seiner unwirksamen Position zugeordnet ist.

8. Werkzeugmaschine nach Anspruch 7, **dadurch gekennzeichnet, dass** die Verstelleinrichtung (41) einen das Hohlrad (36) umschließenden, mit dem Hohlrad (36) in axialem Mitnahmeeingriff stehenden Verstellring (42) aufweist.

9. Werkzeugmaschine nach Anspruch 8, **dadurch gekennzeichnet, dass** der Verstellring (42) in Mitnahmeverbindung mit einer außen an der Werkzeugmaschine (1) angeordneten Betätigungshandhabe (44) steht.

10. Werkzeugmaschine nach Anspruch 6 und 9, **dadurch gekennzeichnet, dass** die beiden dem Umschaltring (28) und dem Verstellring (42) zugeordneten Betätigungshandhaben (31, 44) unabhängig voneinander betätigbar sind.

11. Werkzeugmaschine nach einem der Ansprüche 1 bis 10, **dadurch gekennzeichnet, dass** der Planetenträger (37) der ausgangsseitigen Getriebestufe (B) drehfest mit der Ausgangswelle (9) verbunden ist.

## Claims

1. Machine tool, in particular hand-operated machine tool, for example a cordless screwdriver or hand drill, with a motor-driven input shaft (8) and an output shaft (9), between which there is provided a multi-stage gear (7) with two planetary gear stages arranged one behind the other, of which the input-side gear stage (A) facing the input shaft (8) has two sun gears (14, 15) of different diameter, arranged coaxially and connected non-rotatably to one another, two planetary gear sets (16, 17) arranged axially one behind the other and each assigned to one of the input-side sun gears (14, 15), two internal gears (20, 21) arranged axially one behind the other and each assigned to one of the planetary gear sets (16, 17) and encompassing the respective planetary gear set, and each capable of switching over from a non-rotatable mounting to a freely rotatable mounting and vice-versa, and a planet carrier (22) facing the output-side gear stage (B), coaxial to the sun gears (14, 15) and the internal gears (20, 21) and with bearing pins (25, 26) projecting from it, on which the planet gears (18, 19) are rotatably mounted, and of which the output-side gear stage (B) facing the output shaft (9) has a sun gear (33) connected non-rotatably to the planet carrier (22) of the input-side gear stage (A), a planetary gear set (34) assigned to the sun gear (33), an internal gear (36) encompassing the planetary gear set (34), and a planet carrier (37) facing the output shaft (9), coaxial to the sun gear (33) and the internal gear (36), and with bearing pins (39) projecting from it, on which the planet gears (35) of the output-side gear stage (B) are rotatably mounted, wherein the internal gear (36) of the output-side gear stage (B) is adjustable axially between a non-rotatable position and a non-rotatable inoperative position partly shifted on to the planet carrier (22) of the input-side gear stage (A) and connecting this planet carrier (22) non-rotatably to the planetary gear set (34) of the output-side gear stage (B) in such a way that a switchable four-speed gearing with different output shaft speeds in the four gears is provided, in which in both positions of the internal gear (36) of the output-side gear stage (B), the one or other of the two internal gears (20, 21) of the input-side gear stage (A) may be switched to be non-rotatable and the other of the two internal gears (14, 15) may be switched to be freely rotatable, **characterised in that**
- in the first gear, in which the speed of the output shaft (9) is lowest, the internal gear (20) assigned to the larger sun gear (14) of the input-side gear stage (A) is freely rotatable and the two other internal gears (21, 36) are non-rotatable relative to the gear housing (13),
- in the second gear, in which the speed of the output shaft (9) is higher than in the first gear, the internal gear (21) assigned to the smaller sun gear (15) of the input-side gear stage (A) is freely rotatable and the two other internal gears (20, 36) are non-rotatable relative to the gear housing (13),
- in the third gear, in which the speed of the output shaft (9) is higher than in the second gear, the internal gear (20) assigned to the larger sun gear (14) of the input-side gear stage (A) is freely rotatable, the internal gear (21) assigned to the smaller sun gear (15) of the input-side gear stage (A) is non-rotatable relative to the gear housing (13), and the output-side gear stage (B) is fixed in its inoperative position, and
- in the fourth gear, in which the speed of the output shaft (9) is higher than in the second gear, the internal gear (20) assigned to the larger sun gear (14) of the input-side gear stage (A) is non-rotatable relative to the gear housing (13), the internal gear (21) assigned to the smaller sun gear (15) of the input-side gear stage (A) is freely rotatable and the internal gear (36) of the output-side gear stage (B) is fixed in its inoperative position,
- and that the speed of the output shaft (9) in the second, third and fourth gears corresponds in each case to the speed of the next lower gear multiplied by a factor in the range of 1.8 to 2.5.

2. Machine tool according to claim 1 **characterised in that** in the input-side gear stage (A) each of the two planetary gear sets (16, 17) is assigned a separate set of bearing pins (25, 26) projecting from the planet carrier (22), wherein the two sets of bearing pins (23, 24) are offset at an angle and arranged with a different radius from one another, and the bearing pins (25) assigned to the planetary gear set (16) facing away from the planet carrier (22) run through between the planet gears (19) of the planetary gear set (17) facing the planet carrier (22).

3. Machine tool according to claim 2, **characterised in that** the two planetary gear sets (16, 17) of the input-side gear stage (A) have an identical circumradius (r).

4. Machine tool according to any of claims 1 to 3, **characterised in that** the two internal gears (20, 21) of the input-side gear stage (A) are assigned a change-over device (27) actuable from the outside, so that in a first switching status the one internal gear (21) is non-rotatable and the internal gear (20) is freely rotatable relative to the housing (13), and in a second switching status the one internal gear (21) is freely rotatable and the other internal gear (20) is non-rotatable relative to the housing (13).

5. Machine tool according to claim 4, **characterised in that** the two internal gears (20, 21) of the input-side gear stage (A) have an identical outside diameter, and the change-over device (27) has a change-over ring (28) mounted so as to be axially slidable and non-rotatable relative to the gear housing (13) and resting on one of the internal gears (20, 21) in each of the two switching states and encompassing the internal gear concerned, with which it is in locking engagement.

6. Machine tool according to claim 5, **characterised in that** the change-over ring (28) is in driving connection with an operating handle (31) provided on the outside of the machine tool (1).

7. Machine tool according to any of claims 1 to 6, **characterised in that** the internal gear (36) of the output-side gear stage (B) is assigned an externally actuable adjusting device (41) for its axial movement between its operative and its inoperative position.

8. Machine tool according to claim 7, **characterised in that** the adjusting device (41) has an adjusting ring (42) encompassing the internal gear (36) and in axial non-rotatable engagement with the internal gear (36).

9. Machine tool according to claim 9, **characterised in that** the adjusting ring (42) is in driving connection with an operating handle (44) provided on the outside of the machine tool (1).

10. Machine tool according to claims 6 and 9, **characterised in that** the two operating handles (31, 44) assigned to the change-over ring (28) and the adjusting ring (42) may be operated independently of one another.

11. Machine tool according to any of claims 1 to 10, **characterised in that** the planet carrier (37) of the output-side gear stage (B) is connection non-rotatably to the output shaft (9).

## Revendications

1. Machine-outil, en particulier machine-outil à main, par exemple visseuse sans fil ou perceuse à main, avec un arbre d'entrée (8) entraîné par moteur et un arbre de sortie (9), entre lesquels est disposé un engrenage (7) à plusieurs étapes avec deux étapes d'engrenages planétaires disposés l'un derrière l'autre, dont l'étape d'engrenage (A) côté entrée tournée vers l'arbre d'entrée (8) présente deux roues solaires (14, 15) disposées coaxialement l'une à l'autre et liée en rotation l'une à l'autre de diamètre différent, deux paires de roues planétaires (16, 17) disposées dans le sens axial l'une derrière l'autre et associées respectivement à l'une des roues solaires (14, 15) côté entrée, deux couronnes (20, 21) disposées dans le sens axial l'une derrière l'autre et associées respectivement à l'une des paires de roues planétaires (16, 17) et entourant la ensemble de roues planétaires respective, qui peuvent être commutées respectivement d'un logement bloqué en rotation à un logement sans rotation et inversement, et un porte-satellites (22) tourné vers l'étape d'engrenage (B) côté sortie, coaxial aux roues solaires (14, 15) et aux couronnes (20, 21) avec des tiges d'appui (25, 26) dépassant de celui-ci, sur lesquelles les roues planétaires (18, 19) sont logées à rotation, et dont l'étape d'engrenage (B) coté sortie tourné vers l'arbre de sortie (9) contient une roue solaire (33) liée en rotation au porte-satellites (22) de l'étape d'engrenage (A) côté entrée, une de roues planétaires (34) associée à la roue solaire (33), une couronne (36) entourant la ensemble de roues planétaires (34) et un porte-satellites (37) tourné vers l'arbre de sortie, coaxial à la roue solaire (33) et à la couronne (36) avec des tiges d'appui (39) dépassant de celui-ci, sur lesquelles les roues planétaires (35) de l'étape d'engrenage (B) côté sortie sont logées à rotation, dans lequel la couronne (36) de l'étape d'engrenage (B) côté sortie peut être réglée dans le sens axial entre une position disposée de manière bloquée en rotation et une position inactive bloquée en rotation, déplacée partiellement sur le porte-satellites (22) de l'étape d'engrenage (A) côté entrée et liant ce porte-satellites (22) en rotation à la ensemble de roues planétaires(34) de l'étape d'engrenage (B) côté sortie de sorte qu'il résulte un engrenage à quatre rapports commutables avec différentes vitesses de rotation de l'arbre de sortie dans les quatre rapports, par le fait que dans les deux positions de la couronne (36) de l'étape d'engrenage (B) côté sortie, l'une ou l'autre des deux couronnes (20, 21) de l'étape d'engrenage (A) côté entrée peut être commutée sur bloquée en rotation et l'autre respectivement des deux couronnes (20, 21) sur sans rotation, **caractérisée en ce que**
- dans le premier rapport, dans lequel la vitesse de rotation de l'arbre de sortie (9) est la plus petite, la couronne (20) associée à la plus grande roue solaire (14) de l'étape d'engrenage (A) côté entrée est disposée libre en rotation et les deux autres couronnes (21, 36) sont disposés de manière bloquée en rotation par rapport au boîtier d'engrenage (13),
- dans le deuxième rapport, dans lequel la vitesse de rotation de l'arbre de sortie (9) est supérieure à celle du premier rapport, la couronne (21) associée à la plus petite roue solaire (15) de l'étape d'engrenage (A) côté entrée est libre en sans rotation et les deux autres couronnes (20, 36) sont disposées de manière bloquée en rotation par rapport au boîtier d'engrenage (13),
- dans le troisième rapport, dans lequel la vitesse de rotation de l'arbre de sortie (9) est supérieure à celle du deuxième rapport, la couronne (20) associée à la plus grande roue solaire (14) de l'étape d'engrenage (A) côté entrée est disposée libre en rotation, la couronne (21) associée à la plus petite roue solaire (15) de l'étape d'engrenage (A) côté entrée est disposée de manière bloquée en rotation par rapport au boîtier d'engrenage (13) et la couronne (36) de l'étape d'engrenage (B) côté sortie est disposée dans sa position inactive et
- dans le quatrième rapport, dans lequel la vitesse de rotation de l'arbre de sortie (9) est supérieure à celle du troisième rapport, la couronne (20) associée à la plus grande roue solaire (14) de l'étape d'engrenage (A) côté entrée est disposée de manière bloquée en rotation par rapport au boîtier d'engrenage (13), la couronne (21) associée à la plus petite roue solaire (15) de l'étape d'engrenage (A) côté entrée est disposée libre en rotation et la couronne (36) de l'étape d'engrenage (B) côté sortie est disposée dans sa position inactive,
- et la vitesse de rotation de l'arbre de sortie (9) dans le deuxième, troisième et quatrième rapports correspond respectivement à la vitesse de rotation du plus petit rapport contigu multipliée par un facteur compris dans la plage d'environ 1,8 à 2,5.

2. Machine-outil selon la revendication 1, **caractérisée en ce que** dans l'étape d'engrenage (A) côté entrée, respectivement une ensemble séparée de tiges d'appui (25, 26) dépassant du porte-satellites (22) est associée aux deux paires de roues planétaires (16, 17), dans laquelle les deux paires de tiges d'appui (23, 24) sont décalées selon un angle et disposées avec un rayon différent l'une par rapport à l'autre et les tiges d'appui (25) associées à la ensemble de roues planétaires (16) éloignée du porte-satellites (22) s'étendent entre les roues planétaires (19) de la ensemble de roues planétaires (17) tournée vers le porte-satellites (22).

3. Machine-outil selon la revendication 2, **caractérisée en ce que** les deux paires de roues planétaires (16, 17) de l'étape d'engrenage (A) côté entrée présentent un rayon circulaire (r) identique.

4. Machine-outil selon l'une quelconque des revendications 1 à 3, **caractérisée en ce qu'**un dispositif de commutation (27) actionnable de l'extérieur est associé aux deux couronnes (20, 21) de l'étape d'engrenage (A) côté entrée de sorte que dans un première état de commutation, une couronne (21) soit bloquée en rotation par rapport au boîtier (13) et la couronne (20) soit sans rotation et dans un second état de commutation, une couronne (21) soit sans rotation et l'autre couronne (20) soit bloquée en rotation par rapport au boîtier (13).

5. Machine-outil selon la revendication 4, **caractérisée en ce que** les deux couronnes (20, 21) de l'étape d'engrenage (A) côté entrée présentent un diamètre extérieur identique et le dispositif de commutation (27) présente un anneau de commutation (28) logé de manière mobile axialement et bloquée en rotation par rapport au boîtier d'engrenage (13) qui siège dans chacun des deux états de commutation sur l'une des deux couronnes (20, 21) et l'entoure et se trouve en engagement de verrouillage avec la couronne concernée.

6. Machine-outil selon la revendication 5, **caractérisée en ce que** l'anneau de commutation (28) se trouve en liaison d'entraînement avec une manette d'actionnement (31) disposée à l'extérieur sur la machine-outil (1).

7. Machine-outil selon l'une quelconque des revendications 1 à 6, **caractérisée en ce qu'**un dispositif de réglage (41) actionnable de l'extérieur est associé à la couronne (36) de l'étape d'engrenage (B) côté sortie pour son réglage axial entre sa position active et sa position inactive.

8. Machine-outil selon la revendication 7, **caractérisée en ce que** le dispositif de réglage (41) présente un anneau de réglage (42) entourant la couronne (36), se trouvant en engagement d'entraînement axial avec la couronne (36).

9. Machine-outil selon la revendication 8, **caractérisée en ce que** l'anneau de réglage (42) se trouve en liaison d'entraînement avec une manette d'actionnement (44) disposée à l'extérieur sur la machine-outil (1).

10. Machine-outil selon la revendication 6 et 9, **caractérisée en ce que** les deux manettes d'actionnement (31, 44) associées à l'anneau de commutation (28) et à l'anneau de réglage (42) peuvent être actionnées indépendamment l'une de l'autre.

11. Machine-outil selon l'une quelconque des revendications 1 à 10, **caractérisée en ce que** le porte-satellites (37) de l'étape d'engrenage (B) côté sortie est lié en rotation à l'arbre de sortie (9).
